# EUROPEAN PATENT SPECIFICATION

(11) **EP 3 785 833 B1**
(45) Date of publication and mention of the grant of the patent: **28.02.2024**
(21) Application number: 19194539.3
(22) Date of filing: 30.08.2019
(51) Int. Cl.: B23C 5/00, B23C 5/26, B23C 5/28

(54) **ASSEMBLY WITH MILLING TOOL BODY**
ANORDNUNG MIT FRÄSWERKZEUGKÖRPER
ENSEMBLE AVEC CORPS DE FRAISE

(43) Date of publication of application: 03.03.2021
(73) Proprietor: AB Sandvik Coromant, 811 81 Sandviken (SE)
(72) Inventor: GANGSTAD, Lars, 811 61 Sandviken (SE)
(74) Representative: Sandvik

(56) References cited:
- CN-A- 102 513 563
- CN-A- 102 581 367
- DE-B3-102014 225 911
- US-A1- 2012 275 876

## Description

### TECHNICAL FIELD OF THE INVENTION

The present invention relates to an assembly according to the preamble of claim 1 comprising a milling tool body being rotatable around a central rotation axis. The milling tool body has a front end surface and a rear end surface, wherein an envelope surface surrounds the central rotation axis and extends between the rear end surface and the front end surface. A plurality of insert pockets are formed in a transition between the envelope surface and the front end surface. The insert pockets are arranged for mounting cutting inserts for chip-removing machining, wherein the milling tool body in particular is arranged for a face and/or shoulder milling operation. Such an assembly is known from CN 102 513 563 A.

### BACKGROUND OF THE INVENTION AND PRIOR ART

The invention is related to problems that may arise in known assemblies with milling tool bodies mounted to adaptors, which are used for connecting the milling tool bodies to milling machines.

US9238273 discloses such a known assembly, in which a milling tool body is mounted to an adaptor (holder) by means of a screw. The milling tool body has a central through-hole forming a cylindrical seat for the adaptor comprising a relatively smaller diameter and a cylindrical coolant chamber comprising relatively larger diameter. An internal shoulder is formed inside the central through-hole between the cylindrical seat and the cylindrical coolant chamber, wherein the milling tool body is mounted to the adaptor by the screw head pressing against the internal shoulder of the central through-hole via a washer.

US9623497 discloses a similar assembly with a screw that is used for mounting a milling tool body to an adaptor inserted into a central through-hole of the milling tool body. A recessed surface is formed in a front face of the milling tool body. The recessed surface includes a cylindrical surface extending axially into the front face of the milling tool body, wherein an internal shoulder surface (seating surface) for the screw is extending radially inside of a bottom surface of the recessed surface. A coolant cap is furthermore secured by a retaining ring mounted in the cylindrical surface of the recessed surface, whereby the coolant cap is spaced from the retaining screw to form a coolant chamber with the recessed surface.

JP4349824 discloses another known assembly comprising a milling tool body with a central through-hole having two different diameters. The milling tool body is attached to an adaptor (arbor) inserted into the central through-hole by means of a screw (fastening bolt), which is screwed into the adaptor and abuts an internal shoulder formed by the different diameters of the central through-hole.

The known assemblies described above may suffer from vibrations caused by an unbalanced milling tool body, wherein the milling tool body wobbles when rotated around the central rotation axis (during milling). Furthermore, the milling tool bodies may suffer from axial/radial run-out, wherein the cutting inserts mounted in the insert pockets exhibit deviations in the positions between their respective cutting edges.

More precisely, the vibrations caused by the unbalanced rotating milling tool body may arise when the central through-hole comprises parts of different diameters, which are manufactured by separate drilling and/or milling operations performed from the rear end surface and the front end surface respectively on the milling tool body. Insufficient manufacturing tolerances during these drilling/milling operations may lead to non-concentric parts of different diameters. In other words, the milling tool body may thereby exhibit an uneven distribution of mass around the central rotation axis, which leads to vibrations during the milling operation. Additionally, the coupling force/load applied on the milling tool body, when mounting it to the adaptor, is concentrated centrally on the milling tool body as the screw head presses directly (or via a washer) on an internal shoulder surface, whereas the rear end surface is abutting the adaptor at a relatively larger diameter. The centrally applied coupling force from the screw head acting on the internal shoulder surface may induce an elastic deformation or bending of the milling tool body that causes axial/radial run-out on the mounted cutting inserts in the insert pockets.

### SUMMARY OF THE INVENTION

The object of the present invention is that of providing a milling tool body exhibiting a reduced tendency to vibrate during use and a reduced axial/radial run-out when mounting the milling tool body to an adaptor. This in turn improves the machining precision or surface finish of the milled workpiece surface and decreases the wear of the cutting inserts mounted in the insert pockets of the milling tool body.

This object is achieved by the assembly of claim 1. Accordingly, the milling tool body of the assembly of the present invention has a front end surface and a rear end surface, wherein an envelope surface surrounds a central rotation axis and extends between the rear end surface and the front end surface. The milling tool body includes a plurality of insert pockets formed in a transition between the envelope surface and the front end surface. The milling tool body has a first central through-hole that extends between the rear end surface and the front end surface, wherein the assembly further includes a locking disc with a second central through-hole and a fastening device arranged to extend through the second central through-hole of the locking disc. The assembly is characterized in that the first central through-hole of the milling tool body is of constant diameter and in that the locking disc is arranged to press against the front end surface of the milling tool body when mounting the milling tool body to an adaptor by the fastening device being mountable to an end of the adaptor which is insertable into the first central through-hole of the milling tool body.

The constant diameter of the first central through-hole excludes that the first central through-hole has any inner flanges or internal shoulder surfaces for mounting the milling tool body with the fastening device (screw). In this way, the first central through-hole can be manufactured in for instance a single drilling operation from only one side of the milling tool body, so that further drilling or milling from the opposite side for manufacturing of inner flanges/internal shoulder surfaces and coolant chambers being recessed in relation to the front end surface is no longer required. This reduces the risk of manufacturing an unbalanced milling tool body that gives rise to vibrations during milling.

Furthermore, the locking disc is a loaded component, coupled to the adaptor with the fastening device, wherein the locking disc is arranged to press against the front end surface at a more radially outer region of the milling tool body. The compressive forces/load on the milling tool body will thus be more evenly distributed compared to when the milling tool body is coupled to an adaptor by a screw pressing directly (or via a washer) against an inner shoulder surface of the milling tool body. This will result in less elastic deformation or bending of the mounted milling tool body, whereby the axial/radial run-out on the cutting edges on the cutting inserts mounted in the insert pockets of the milling tool body is reduced.

In an embodiment of the assembly, a diameter of the locking disc is at least 50 % of a maximum diameter of the milling tool body. In this way, the coupling force provided by the locking disc is further improved by moving it more radially outwards to at least 50 % of the maximum diameter of the milling tool body. The locking disc and the adaptor at the rear end surface can hereby provide opposite and more aligned compression forces, which will result in less elastic deformation or bending of the mounted milling tool body, whereby the axial/radial run-out of the milling tool body is further reduced. The locking disc may also provide a more distributed force/load on the front end surface of the milling tool body, which is beneficial in reducing the elastic deformation or bending of the mounted milling tool body.

In a further embodiment of the assembly, a diameter of the locking disc is substantially the same as a diameter of the rear end surface. Hence, the rear end surface is hereby provided with a planar mounting surface having an outer diameter that is essentially the same as an outer diameter of the locking disc. The substantially same diameters do not mean that they must exhibit the exact same diameter. Instead, a substantially same diameter should hereby be understood as also including deviations of ± 10 % between the diameters of the locking disc and rear end surface of the milling tool body. In this way, the locking disc and rear end surface exhibit the same diameters, so that the locking disc and the adaptor at the rear end surface provides opposite and aligned compression forces, which minimizes the risk for elastic deformation or bending of the mounted tool body, so that the axial/radial run-out of the milling tool body is further reduced.

In yet an embodiment of the assembly, the front end surface comprises a plurality of radial coolant grooves for conducting coolant from the first central through-hole toward the insert pockets, wherein the radial coolant grooves are at least partly covered by the locking disc when mounting the milling tool body to the adaptor. Such coolant grooves are simpler to manufacture than internal coolant channels. The manufacturing of a milling tool body providing coolant to the cutting inserts mounted in the insert pockets is hereby facilitated, since it is not necessary to drill internal coolant channels all the way through the milling tool body or machine a large coolant chamber, which is recessed in the front end surface. Instead, the radial coolant grooves can be formed in the front end surface, which is covered by the locking disc that presses against the front end surface of the milling tool body.

In a further embodiment of the assembly, the radial coolant grooves in the front end surface extend between the first central through-hole and the insert pockets. In other words, the radial coolant grooves extend all the way between the first central through-hole and the insert pockets. In this way, the coolant is directed to the insert pockets solely inside the coolant grooves. This simplifies manufacturing compared to having internal coolant channels in the milling tool body.

In another embodiment of the assembly, the radial coolant grooves in the front end surface are connected to internal coolant channels in the milling tool body, the internal coolant channels extending between the radial coolant grooves and the insert pockets. Hence, each internal coolant channel is drilled in an outer portion of the milling tool body and is communicating with each radial coolant groove. In this way, the direction of the coolant can be optimized so the coolant reaches the insert pockets at a desired angle. Furthermore, the radial coolant groove is preferably connected to the internal coolant channel at a position situated radially inside a diameter of the locking disc. The locking disc will hereby completely cover the radial coolant grooves, wherein the radial coolant grooves transform into the internal coolant channels at the position situated inside the locking disc.

In an embodiment of the assembly, the front end surface is forming an annular relief surface, which surrounds the central rotation axis and is configured to provide an axial gap to the locking disc, wherein the front end surface is forming an abutment surface, which is surrounding the annular relief surface and is in contact with the locking disc when mounting the milling tool body to the adaptor. The annular relief surface ensures that the contact between the locking disc and the front end surface is provided radially outwards in the area of the abutment surface surrounding the annular relief surface. Preferably, the abutment surface is provided at an outer annular region of the locking disc (slightly inside the maximum diameter of the locking disc). A more defined/controlled contact between the locking disc and the front end surface is thereby achieved. Furthermore, the locking disc may bend somewhat when mounting the milling tool body to the adaptor, wherein the annular relief surface ensures that a bending locking disc does not block a supply of coolant from outlets at an end of the adaptor.

In the previous embodiment, the annular relief surface may form a conical relief surface extending at an acute angle θ with the central rotation axis as seen in longitudinal sections containing the central rotation axis of the milling tool body. In this way, the gap formed between the locking disc and the front end surface increases in the direction radially inwards, so that the gap is larger in an inner region where a bending of the locking disc exhibits the highest deflection (around the second central through-hole and the fastening device). The acute angle θ on the conical relief surface may be in the range 89,5° ≤ θ ≤ 86°. In other words, the conical relief surface is forming a rather small slope (0,5° - 4°) with a horizontal plane perpendicular with the rotational axis or the plane of the locking disc. The purpose of the relief surface is merely to provide a small axial gap to ensure on the one hand that the locking disc is contacting the abutment surface in a defined outer radial region, and on the other hand that any potential bending of the locking disc does not block the supply of coolant from the adaptor in an inner radial region of the front end surface of the milling tool body.

In yet a further embodiment, the abutment surface, as seen in longitudinal sections containing the central rotation axis of the milling tool body, is forming a convex abutment surface for contacting the locking disc when mounting the milling tool body to the adaptor. The convex abutment surface ensures a defined (circle/line) contact between the locking disc and the abutment surface surrounding the annular relief surface. The convex abutment surface provides a higher pressure in the circular/line contact between the locking disc and the convex abutment surface to prevent leakage of coolant at the periphery of the locking disc, so that the coolant instead passes through the coolant grooves (and the internal coolant channels) of the milling tool body.

In another embodiment, the locking disc comprises a ring-shaped contact surface at an outer portion of the locking disc, wherein the ring-shaped contact surface, as seen in longitudinal sections containing the central rotation axis of the milling tool body, is forming a convex contact surface for contacting the front end surface when mounting the milling tool body to the adaptor. This is an alternative solution to having the convex abutment surface in the front end surface of the milling tool body.

In an embodiment the milling tool body is disc-shaped by the rear end surface comprising a planar mounting surface directly connected to the envelope surface, which extends at a continuously increasing diameter from the planar mounting surface toward the front end surface. Hence, the milling tool body is disc-shaped in the meaning that it does not have a cylindrical rear end portion as conventional milling tool bodies (as shown in for instance the prior art mentioned above). In this way the disc-shaped milling tool body reduces the distance that the milling tool body extends from the adaptor (also known as tool overhang). The reduced distance or tool overhang of the milling tool body will further reduce vibrations during the milling operation. Moreover, the disc-shaped tool body also reduces production and shipping cost of the milling tool body due to less material and lower weight on the milling tool body. The relatively lower weight of the milling tool body is also beneficial in reducing vibrations during milling.

In a further embodiment of the assembly, the rear end surface further comprises driving slots being recessed in relation to the planar mounting surface and the envelope surface connected thereto. In this way, a stable driving connection is achieved without the addition of material to the milling tool body in comparison with the known milling tool bodies having the cylindrical rear end portions including driving slots. This further reduces the weight of the milling tool body, which also reduces vibrations during milling as well as the production/shipping cost of the milling tool body.

In an embodiment of the assembly, the fastening device is a screw having a threaded shank and a screw head with a bearing surface that tapers toward the threaded shank, wherein the second central through-hole of the locking disc includes a chamfered surface for abutting the tapering bearing surface of the screw head, so that the screw head becomes at least partly countersunk in the second through-hole of the locking disc when mounting the milling tool body to the adaptor. This reduces the axial protrusion of the screw head from the locking disc, since the tapering bearing surface of the screw head is abutting the chamfered surface located inside the second through-hole. Hence, it reduces the axial protrusion of the screw head and ensures that the screw head is situated axially inside the axial foremost position of the cutting inserts mounted in the insert pockets. The screw head is preferably a flat head with the tapering bearing surface. Hence, the flat screw head provides a relatively short screw head for further reducing the axial protrusion of the screw head from the locking disc. The chamfered surface of the second central through-hole and the tapering bearing surface of the screw head preferably exhibit a conical extension. However, the tapering bearing surface and chamfered surface may also exhibit a concavely and convexly curved extension respectively. Hence, the bearing surface and the chamfered surface hereby exhibit a complementary shape for abutment each other.

In a further embodiment, the assembly comprises an adaptor including a cylindrical shaft portion, which is insertable into the first central through-hole of the milling tool body, wherein the fastening device is a screw and an end of the cylindrical shaft portion comprises a central screw hole. Accordingly, the assembly comprising the milling tool body with the locking disc and the adaptor is coupled by mounting the screw into the central screw hole at the end of the adaptor, whereby the mounted assembly or a rear end portion of the adaptor can be connected to a milling machine.

In said further embodiment, the adaptor may comprise at least one internal coolant passageway extending in parallel with the central screw hole inside the cylindrical shaft portion, wherein the at least one internal coolant passageway has an outlet situated radially outside the central screw hole in the end of the cylindrical shaft portion. In other words, the coolant outlet and central screw hole are placed side by side in the end of the cylindrical shaft portion, which central screw hole connects the locking disc to the adaptor. In this way the coolant from the outlets is provided radially outside the central screw hole and can be conducted further radially outwards in coolant grooves provided between the front end surface and the locking disc of the milling tool body. Preferably, the adaptor comprises several internal coolant passageways extending in parallel with the central screw hole, the internal coolant passageways being evenly distributed around the central screw hole and having outlets being evenly distributed around the central screw hole. This ensures an even distribution of coolant around the entire circumference of the milling tool body.

### BRIEF DESCRIPTION OF THE DRAWINGS

Embodiments are described with references to the drawings, in which:
- Fig 1a: shows a perspective view of an assembly comprising a milling tool body and an adaptor according to an embodiment of the invention,
- Fig 1b: shows an exploded view toward a rear end of the assembly in Fig 1a,
- Fig 1c: shows an exploded view toward a front end of the assembly of Fig 1a,
- Fig 2: shows a longitudinal-section containing a central rotation axis of the assembly of Fig 1a,
- Fig 3: shows a front end view of the assembly without the locking disc and the fastening member,
- Fig 4: shows a longitudinal-section containing the central rotation axis of the milling tool body without the locking disc and the fastening member.

### DETAILED DESCRIPTION OF EMBODIMENTS OF THE INVENTION

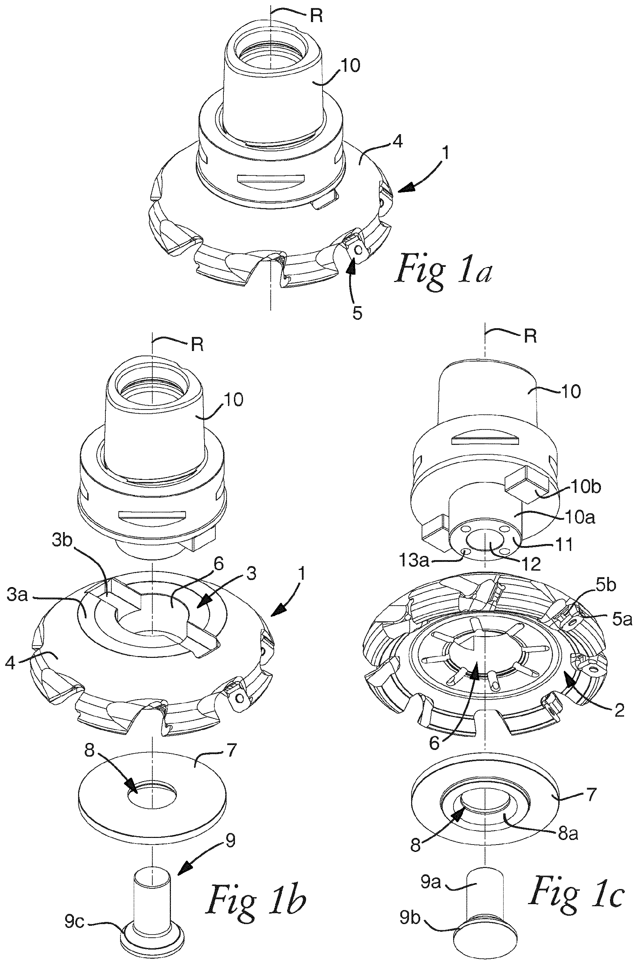

Fig 1a - 1c show a perspective view and two exploded views of an assembly comprising a milling tool body 1 and an adaptor 10 according to an embodiment of the invention. The milling tool body 1, which is rotatable around a central rotation axis R, includes a front end surface 2 and a rear end surface 3, wherein an envelope surface 4 surrounds the central rotation axis R and extends between the rear end surface 3 and the front end surface 2. A plurality of insert pockets 5 are formed in a transition between the envelope surface 4 and the front end surface 2. The insert pockets 5 are configured for mounting non-disclosed indexable cutting inserts. More precisely, the pockets 5 are hereby configured with support surfaces 5a, 5b for mounting indexable cutting inserts for face milling. Hence, the milling tool body is adapted for face milling. The support surfaces include support surfaces 5a, 5b arranged so that an active main cutting edge of the cutting insert is forming an acute angle with a horizontal plane perpendicular with the central rotation axis R. In other words, the milling tool body is configured for face milling by having a main cutting edge of the indexable cutting insert extending at an acute entering angle (45°) with the horizontal plane. However, the milling tool body may also be configured for a shoulder milling operation by the pockets including support surfaces 5a, 5b configured for supporting cutting inserts having active main cutting edges that extend in parallel with the central rotation axis (at an entering angle of 90°).

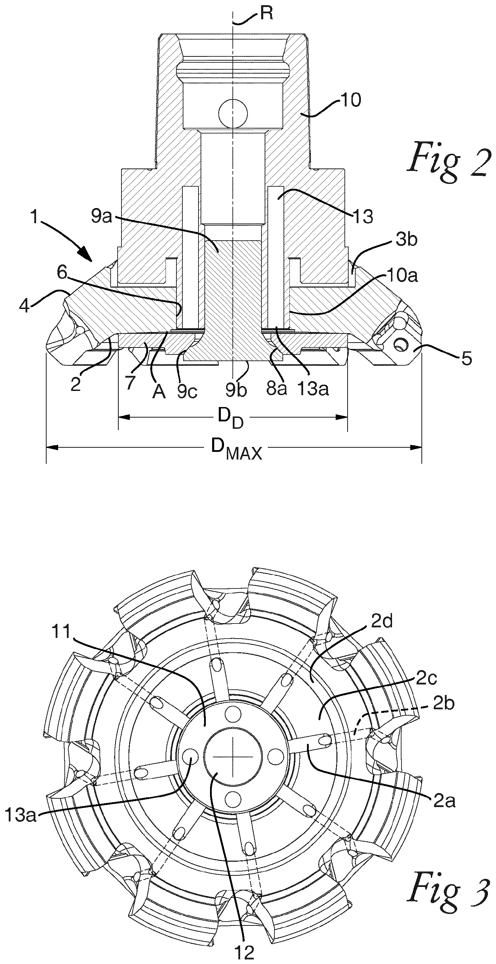

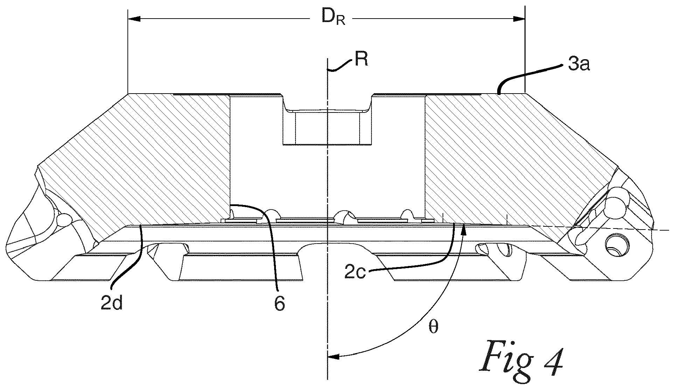

Additionally, as can be seen in Figs 2 and 4, a first central through-hole 6 of constant diameter extends between the rear end surface 3 and the front end surface 2, wherein a cylindrical shaft portion 10a of the adaptor 10 is insertable into the first central through-hole 6. The assembly further includes a locking disc 7 with a second central through-hole 8 and a fastening device 9 in the form of a screw arranged to extend through the second central through-hole 8 of the locking disc 7. The locking disc 7 is arranged to press against the front end surface 2 of the milling tool body 1 when mounting the milling tool body 1 to the adaptor 10. This is achieved by mounting the fastening device/screw 9 into a central screw hole 12 in an end 11 of the cylindrical shaft portion 10a inserted into the first central through-hole 6 of the milling tool body.

The milling tool body in the shown embodiment is disc-shaped by the rear end surface 3 comprising a planar mounting surface 3a directly connected to the envelope surface 4, which extends at a continuously increasing diameter from the planar mounting surface 3a toward the front end surface 2. The envelope surface 4 is not extending at the continuously increasing diameter all the way to the front end surface 2. Instead, the milling tool body 1 hereby exhibits a maximum diameter D_{MAX} at an outer periphery of the pockets 5 (see Fig 2), wherein the envelope surface 4 is extending at a decreasing diameter between the maximum diameter D_{MAX} and the front end surface 2.

The rear end surface 3 of the milling tool body further comprises driving slots 3b or keyways being recessed in relation to the planar mounting surface 3a and the envelope surface 4. The adaptor 10 is provided with corresponding driving keys 10b that engage the driving slots/keyways 3b when mounting the adaptor to the milling tool body. In other words, the milling tool body and the adaptor is forming an arbor mounting for transferring torque between the adaptor and the milling tool body.

As can be seen in Fig 2, the locking disc 6 has a diameter D_{D}, which is at least 50 % of the maximum diameter D_{MAX} of the milling tool body 1. More precisely, in this embodiment the diameter D_{D} of the locking disc 10 is approximately 65% of the maximum diameter of the milling tool body. The diameter D_{D} of the locking disc 10 hereby corresponds to (is substantially the same as) an outer diameter D_{R} of the planar mounting surface 3a on the rear end surface 3 as shown in Fig 4.

Fig 3 discloses a front end view toward the front end surface 2 of the milling tool body. The front end surface 2 includes a plurality of radial coolant grooves 2a for conducting coolant from the first central through-hole 6 toward the insert pockets 5. The radial coolant grooves 2a are covered by the locking disc 7 when mounting the milling tool body 1 to the adaptor 10. Each radial coolant groove 2a is further connected to an internal coolant channel 2b in the milling tool body, wherein each internal coolant channel 2b extends between the radial coolant groove 2a and the insert pocket 5. The radial coolant grooves 2a are connected to the internal coolant channels 2b at a position situated radially inside the diameter D_{D} of the locking disc 7. The locking disc 7 will thereby completely cover the radial coolant grooves 2a, wherein the radial coolant grooves 2a transform into the internal coolant channels 2b at a radial position situated inside the locking disc 7.

The front end surface 2 is further forming an annular relief surface 2c surrounding the central rotation axis R, wherein the annular relief surface 2c is configured to provide an axial gap A to the locking disc 7. The axial gap A between the locking disc 7 and the annular relief surface 2c is hereby very small and barely visible in Fig 3. The axial gap A is provided by the annular relief surface 2c forming a conical relief surface extending an acute angle θ with the central rotation axis R as seen in longitudinal sections containing the central rotation axis R of the milling tool body (see Fig 4). The acute angle θ on the relief surface 2c is hereby relatively large and may be in the range 89,5° ≤ θ ≤ 86°. In the embodiment shown the acute angle θ on the relief surface 2c is 89° in relation to the central rotation axis R to provide said axial gap A to the locking disc 7.

The front end surface 2 is further forming an abutment surface 2d, which is surrounding the annular relief surface 2c, wherein the abutment surface 2d is arranged to be in contact with the locking disc 7 when mounting the milling tool body 1 to the adaptor 10. The abutment surface 2d in the shown embodiment is forming a convex abutment surface 2d, as seen in the longitudinal section of Fig 4, which ensures a defined (circle/line) contact at an outer annular region between the locking disc 7 and the convex abutment surface 2d when mounting the milling tool body 1 to the adaptor 10. Alternatively, the locking disc 7 may comprise a ring-shaped contact surface at an outer portion of the locking disc 7, wherein the ring-shaped contact surface, as seen in longitudinal sections containing the central rotation axis R, forms a convex contact surface for contacting a flat annular portion of the front end surface 2 when mounting the milling tool body 1 to the adaptor 10. This would achieve the same effect of said defined (circle/line) contact at an outer annular region between the convex contact surface of the locking disc and the flat annular portion of the front end surface.

The fastening device is a screw 9 having a threaded shank 9a and a screw head 9b with a bearing surface 9c that tapers toward the threaded shank 9a, wherein the second central through-hole 8 of the locking disc 7 includes a chamfered surface 8a for abutting the tapering bearing surface 9c of the screw head 9b, so that the screw head 9b becomes at least partly countersunk in the second through-hole 8 of the locking disc 7 when mounting the milling tool body 1 to the adaptor 10. As can be seen in Fig 3, this reduces the axial protrusion of the screw head 9b from the locking disc 7, and the tapering bearing surface 9c of the screw head 9b abuts the chamfered surface 8a located inside the second through-hole 8 to reduce the axial protrusion of the screw head 9b. Further, as can be seen, the screw head 9b is situated axially inside the axial foremost position of the insert pockets. Moreover, the screw head 9b is a flat head with the tapering bearing surface 9c to provide a relatively short screw head and further reduce the axial protrusion of the screw head 9b from the locking disc 7. The chamfered surface 8a of the second central through-hole 8 and the tapering bearing surface 9c of the screw head 9b further exhibit a corresponding conical extension for abutment inside the second central through-hole 8.

As can be seen in Figs 1 - 3, the adaptor 10 includes the cylindrical shaft portion 10a, which is inserted into the first central through-hole 6 of the milling tool body. The fastening device is a screw 9 and the end 11 of the cylindrical shaft portion 10a includes the central screw hole 12 for mounting the screw 9, whereby the locking disc 7 presses against the front end surface 2 at the convex abutment surface 2d. The adaptor 10 comprises a plurality of (four) internal coolant passageways 13 extending in parallel with the central screw hole 12 inside the cylindrical shaft portion 10a, wherein each internal coolant passageway 13 has an outlet 13a situated radially outside the central screw hole 12 in the end 11 of the cylindrical shaft portion 10a. The internal coolant passageways 13 are evenly distributed (spaced) around the central screw hole 12 and has four outlets 13a being evenly distributed (spaced) around the central screw hole 12 to ensure an even distribution of coolant around the entire circumference of the milling tool body 1.

The first central through-hole 6 of constant diameter can hereby be manufactured by a single drilling/milling operation from either the front end 2 or the rear end 3 of the milling tool body, which reduces the risk of manufacturing an unbalanced milling tool body that gives rise to vibrations during milling. In other words, the milling tool body does not require the manufacturing inner mounting flanges/internal shoulder surfaces (or large coolant chambers being recessed in relation to the front end surface). Instead, the locking disc 7 with the screw 9 extending through the second central through-hole 8 is mounted into the central screw hole 12 in the end of the adaptor 10, whereby the locking disc 7 presses against the convex abutment surface 2d, which is situated at an outer annular radial region that is substantially the same as the diameter D_{R} of the planar mounting surface 3a at the rear end 3 of the milling tool body. The front and rear forces that act on the mounted milling tool body 1 are thereby oppositely directed and aligned to minimize elastic deformation or bending of the milling tool body so that the axial/radial run-out on the mounted milling tool body is minimized.

Additionally, the conical relief surface 2c along the front end surface 2 on the milling tool body 1 provides a small axial gap A to safeguard on the one hand that the locking disc 7 is contacting front end surface 2 in a defined outer annular radial region (the convex abutment surface 2d), and on the other hand that any potential bending of the locking disc 7 does not block the supply of coolant from the coolant outlets 13a of the adaptor 13. Although, the locking disc may be made rather thick/stiff, it may nevertheless become bent if the screw 9 is mounted with an excessive torque into the screw hole 12. The deflection caused by such bending of the locking disc 7 is greatest around the centre of the second screw hole 12, wherein the conical relief surface 2c is arranged to provide the largest axial gap A to the locking disc 7 to safeguard the outer contact and flow of coolant from the outlets 13a. The coolant that exits the coolant outlets 13a can thereby flow along the coolant grooves 2a provided in the front end surface 2 and into the internal coolant channels 2b that conduct the coolant further to the insert pockets 5, so that the coolant reaches the insert pockets 5 at a desired angle toward a cutting insert mounted therein. Furthermore, the radial coolant groove 2a is connected to the internal coolant channel 2b at a position situated radially inside a diameter D_{D} of the locking disc 7, so that the locking disc 7 will cover the radial coolant grooves 2a to prevent leakage and provide effective transfer of coolant to the pockets 5. The convex abutment surface 2d further provides a defined line/circular contact with the locking disc 7 to minimize leakage of coolant at the periphery of the locking disc 7 and ensure that the coolant is transferred to the internal coolant channels 2b. The same effect can hereby be achieved by providing the locking disc 7 with a ring-shaped contact surface at an outer portion of the locking disc 7, wherein the ring-shaped contact surface, as seen in longitudinal sections containing the central rotation axis R of the milling tool body 1, is forming a convex contact surface for contacting the front end surface 2 when mounting the milling tool body 1 to the adaptor 10. Additionally, the front end surface 2 on the milling tool body could alternatively be provided with coolant grooves 2b all the way between the first through-hole 6 and the insert pockets 5. This would simplify production of the milling tool body 1 yet may reduce the efficiency in the supply of coolant to the insert pockets 5.

The invention is of course not limited to the embodiments described above, but may be varied and modified within the scope of the following claims.

## Claims

1. An assembly comprising a milling tool body (1) being rotatable around a central rotation axis (R), the milling tool body (1) having a front end surface (2) and a rear end surface (3), wherein an envelope surface (4) surrounds the central rotation axis (R) and extends between the rear end surface (3) and the front end surface (2), wherein a plurality of insert pockets (5) are formed in a transition between the envelope surface (4) and the front end surface (2), wherein a first central through-hole (6) extends between the rear end surface (3) and the front end surface (2), wherein the assembly includes a locking disc (7) with a second central through-hole (8) and a fastening device (9) arranged to extend through the second central through-hole (8) of the locking disc (7), **characterized in that** the first central through hole is of constant diameter and **in that** the locking disc (7) is arranged to press against the front end surface (2) of the milling tool body (1) when mounting the milling tool body (1) to an adaptor (10) by the fastening device (9) being mountable to an end (11) of the adaptor (10) insertable into the first central through-hole (6) of the milling tool body (1).

2. The assembly according to claim 1, wherein a diameter (D_{D}) of the locking disc (6) is at least 50 % of a maximum diameter (D_{MAX}) of the milling tool body (1).

3. The assembly according to claim 1 or 2, wherein a diameter (D_{D}) of the locking disc (10) is substantially the same as a diameter (D_{R}) of the rear end surface (3).

4. The assembly according to any one of the preceding claims, wherein the front end surface (2) comprises a plurality of radial coolant grooves (2a) for conducting coolant from the first central through-hole (6) toward the insert pockets (5), wherein the radial coolant grooves (2a) are at least partly covered by the locking disc (7) when mounting the milling tool body (1) to the adaptor (10).

5. The assembly according to claim 4, wherein the radial coolant grooves (2a) in the front end surface (2) extend between the first central through-hole (6) and the insert pockets (5).

6. The assembly according to claim 4, wherein the radial coolant grooves (2a) in the front end surface are connected to internal coolant channels (2b) in the milling tool body, the internal coolant channels (2b) extending between the radial coolant grooves (2a) and the insert pockets (5).

7. The assembly according to any one of the preceding claims, wherein the front end surface (2) is forming an annular relief surface (2c), which surrounds the central rotation axis (R) and is configured to provide an axial gap (A) to the locking disc (7), wherein the front end surface (2) is forming an abutment surface (2d), which is surrounding the annular relief surface (2c) and is in contact with the locking disc (7) when mounting the milling tool body (1) to the adaptor (10).

8. The assembly according to claim 7, wherein the annular relief surface (2c) is forming a conical relief surface extending at an acute angle θ with the central rotation axis (R) as seen in longitudinal sections containing the central rotation axis (R) of the milling tool body (1).

9. The assembly according to claim 8, wherein the acute angle θ is in the range 89,5° ≤ θ ≤ 86°.

10. The assembly according to any one of claims 7 to 9, wherein the abutment surface (2d), as seen in longitudinal sections containing the central rotation axis (R) of the milling tool body, is forming a convex abutment surface for contacting the locking disc (7) when mounting the milling tool body (1) to the adaptor (10).

11. The assembly according to any one of claims 1 to 9, wherein the locking disc (7) comprises a ring-shaped contact surface at an outer portion of the locking disc (7), wherein the ring-shaped contact surface, as seen in longitudinal sections containing the central rotation axis (R) of the milling tool body (1), is forming a convex contact surface for contacting the front end surface (2) when mounting the milling tool body (1) to the adaptor (10).

12. The assembly according to any one of the preceding claims, wherein the milling tool body is disc-shaped by the rear end surface (3) comprising a planar mounting surface (3a) directly connected to the envelope surface (4), which extends at a continuously increasing diameter from the planar mounting surface (3a) toward the front end surface (2).

13. The assembly according to claim 12, wherein the rear end surface (3) further comprises driving slots (3b) being recessed in relation to the planar mounting surface (3a) and the envelope surface (4) connected thereto.

14. The assembly according to any one of the preceding claims, wherein the fastening device (9) is a screw having a threaded shank (9a) and a screw head (9b) including a bearing surface (9c) that tapers toward the threaded shank (9a), wherein the second central through-hole (8) of the locking disc (7) includes a chamfered surface (8a) for the tapering bearing surface (9c), so that the screw head (9b) becomes at least partly countersunk into the second through-hole (8) of the locking disc (7) when mounting the milling tool body (1) to the adaptor (10).

15. The assembly according to any one of the preceding claims comprising an adaptor (10) including a cylindrical shaft portion (10a), which is insertable into the first central through-hole (6) of the milling tool body, wherein the fastening device (9) is a screw and an end (11) of the cylindrical shaft portion (10a) comprises a central screw hole (12).

16. The assembly according to claim 15, wherein the adaptor comprises at least one internal coolant passageway (13) extending inside the cylindrical shaft portion, wherein the at least one internal coolant passageway (13) has an outlet (13a) situated radially outside the central screw hole (12) in the end (11) of the cylindrical shaft portion (10a).

## Patentansprüche

1. Anordnung mit einem um eine zentrale Rotationsachse (R) rotierbaren Fräskörper (1), wobei der Fräskörper (1) eine Fläche am vorderen Ende (2) und eine Fläche am hinteren Ende (3) aufweist, wobei eine Umfangsfläche (4) die zentrale Rotationsachse (R) umgibt und sich zwischen der Fläche am hinteren Ende (3) und der Fläche am vorderen Ende (2) erstreckt, wobei eine Vielzahl von Einsatztaschen (5) in einem Übergang zwischen der Umfangsfläche (4) und der Fläche am vorderen Ende (2) ausgebildet ist, wobei sich ein erstes zentrales Durchgangsloch (6) zwischen der Fläche am hinteren Ende (3) und der Fläche am vorderen Ende (2) erstreckt, wobei die Anordnung eine Feststellscheibe (7) mit einem zweiten zentralen Durchgangsloch (8) und eine Befestigungsvorrichtung (9) umfasst, die so angeordnet ist, dass sie sich durch das zweite zentrale Durchgangsloch (8) der Feststellscheibe (7) erstreckt, **dadurch gekennzeichnet, dass** das erste zentrale Durchgangsloch einen konstanten Durchmesser aufweist und dass die Feststellscheibe (7) so angeordnet ist, dass sie gegen die Fläche am vorderen Ende (2) des Fräswerkzeugkörpers (1) drückt, wenn der Fräswerkzeugkörper (1) an einem Adapter (10) montiert wird mit der Befestigungsvorrichtung (9), die an einem Ende (11) des Adapters (10) montierbar ist, das in das erste zentrale Durchgangsloch (6) des Fräswerkzeugkörpers (1) einführbar ist.

2. Anordnung nach Anspruch 1, bei der ein Durchmesser (D_{D}) der Feststellscheibe (6) wenigstens 50 % eines maximalen Durchmessers (D_{MAX}) des Fräskörpers (1) beträgt.

3. Anordnung nach Anspruch 1 oder 2, bei der ein Durchmesser (D_{D}) der Feststellscheibe (10) im Wesentlichen gleich einem Durchmesser (D_{R}) der Fläche am hinteren Ende (3) ist.

4. Anordnung nach einem der vorhergehenden Ansprüche, bei der die Fläche am vorderen Ende (2) mehrere radiale Einschnitte (2a) für ein Kühlmittel aufweist, um das Kühlmittel von der ersten zentralen Durchgangsbohrung (6) zu den Einsatztaschen (5) zu leiten, wobei die radialen Einschnitte (2a) wenigstens teilweise durch die Feststellscheibe (7) abgedeckt sind, wenn der Fräskörper (1) an dem Adapter (10) montiert ist.

5. Anordnung nach Anspruch 4, wobei sich die radialen Einschnitte (2a) in der Fläche am vorderen Ende (2) zwischen der ersten zentralen Durchgangsbohrung (6) und den Einsatztaschen (5) erstrecken.

6. Anordnung nach Anspruch 4, wobei die radialen Kühlmitteleinschnitte (2a) in der Fläche am vorderen Ende mit inneren Kühlmittelkanälen (2b) im Fräskörper verbunden sind, wobei sich die inneren Kühlmittelkanäle (2b) zwischen den radialen Einschnitten (2a) und den Einsatztaschen (5) erstrecken.

7. Anordnung nach einem der vorhergehenden Ansprüche, wobei die Fläche am vorderen Ende (2) eine ringförmige Freifläche (2c) ausbildet, die die zentrale Rotationsachse (R) umgibt und so eingerichtet ist, dass sie einen axialen Spalt (A) für die Feststellscheibe (7) vorsieht, wobei die Fläche am vorderen Ende (2) eine Anlagefläche (2d) ausbildet, die die ringförmige Freifläche (2c) umgibt und bei der Montage des Fräskörpers (1) am Adapter (10) in Kontakt mit der Feststellscheibe (7) steht.

8. Anordnung nach Anspruch 7, **dadurch gekennzeichnet, dass** die ringförmige Freifläche (2c) eine konische Freifläche ausbildet, die in Längsschnitten, die die zentrale Rotationsachse (R) des Fräskörpers (1) einschließen, mit der zentralen Rotationsachse (R) einen spitzen Winkel Θ bildet.

9. Anordnung nach Anspruch 8, wobei der spitze Winkel Θ in dem Bereich 89,5° ≤ Θ ≤ 86°.

10. Anordnung nach einem der Ansprüche 7 bis 9, wobei die Anlagefläche (2d) in Längsschnitten, die die zentrale Rotationsachse (R) des Fräskörpers einschließen, eine konvexe Anlagefläche für den Kontakt mit der Feststellscheibe (7) bei der Montage des Fräskörpers (1) am Adapter (10) bildet.

11. Anordnung nach einem der Ansprüche 1 bis 9, bei der die Feststellscheibe (7) an einem äußeren Abschnitt der Feststellscheibe (7) eine ringförmige Kontaktfläche aufweist, wobei die ringförmige Kontaktfläche, gesehen in Längsschnitten, die die zentrale Rotationsachse (R) des Fräskörpers (1) enthalten, eine konvexe Kontaktfläche ausbildet, um die Fläche am vorderen Ende (2) zu berühren, wenn der Fräskörper (1) an dem Adapter (10) montiert wird.

12. Anordnung nach einem der vorhergehenden Ansprüche, wobei der Fräskörper dadurch scheibenförmig ist, dass die Fläche am hinteren Ende (3) eine ebene Montagefläche (3a) aufweist, die direkt mit der Umfangsfläche (4) verbunden ist, die sich mit kontinuierlich zunehmendem Durchmesser von der ebenen Montagefläche (3a) zur Fläche am vorderen Ende (2) erstreckt.

13. Anordnung nach Anspruch 12, bei der die Fläche am hinteren Ende (3) ferner Antriebsschlitze (3b) aufweist, die in Bezug auf die ebene Montagefläche (3a) und die damit verbundene Umfangsfläche (4) ausgenommen sind.

14. Anordnung nach einem der vorhergehenden Ansprüche, wobei das Befestigungsvorrichtung (9) eine Schraube ist, die einen Gewindeschaft (9a) und einen Schraubenkopf (9b) mit einer sich zum Gewindeschaft (9a) hin verjüngenden Auflagefläche (9c) aufweist, wobei die zweite zentrale Durchgangsbohrung (8) der Feststellscheibe (7) eine Anfasung (8a) für die sich verjüngende Auflagefläche (9c) aufweist, so dass der Schraubenkopf (9b) bei der Montage des Fräskörpers (1) am Adapter (10) zumindest teilweise in die zweite Durchgangsbohrung (8) der Feststellscheibe (7) versenkt wird.

15. Anordnung nach einem der vorhergehenden Ansprüche, mit einem Adapter (10), der einen zylindrischen Schaftabschnitt (10a) aufweist, der in die erste zentrale Durchgangsbohrung (6) des Fräskörpers einsetzbar ist, wobei die Befestigungsvorrichtung (9) eine Schraube ist und ein Ende (11) des zylindrischen Schaftabschnitts (10a) ein zentrales Schraubenloch (12) aufweist.

16. Anordnung nach Anspruch 15, wobei der Adapter wenigstens einen inneren Kühlmitteldurchlass (13) aufweist, der sich innerhalb des zylindrischen Schaftabschnitts erstreckt, wobei der wenigstens eine innere Kühlmitteldurchlass (13) einen Auslass (13a) aufweist, der radial außerhalb des zentralen Schraubenlochs (12) im Ende (1 1) des zylindrischen Schaftabschnitts (10a) liegt.

## Revendications

1. Ensemble comprenant un corps de fraise (1) pouvant être entraîné en rotation autour d'un axe de rotation central (R), le corps de fraise (1) présentant une surface d'extrémité avant (2) et une surface d'extrémité arrière (3), où une surface d'enveloppe (4) entoure l'axe de rotation central (R) et s'étend entre la surface d'extrémité arrière (3) et la surface d'extrémité avant (2), où une pluralité de cavités pour plaquette (5) sont ménagées dans une transition entre la surface d'enveloppe (4) et la surface d'extrémité avant (2), où un premier trou traversant central (6) s'étend entre la surface d'extrémité arrière (3) et la surface d'extrémité avant (2), où l'ensemble inclut un disque de verrouillage (7) présentant un second trou traversant central (8) et un dispositif de fixation (9) agencé pour s'étendre à travers le second trou traversant central (8) du disque de verrouillage (7), **caractérisé en ce que** le premier trou traversant central présente un diamètre constant et **en ce que** le disque de verrouillage (7) est agencé pour appuyer contre la surface d'extrémité avant (2) du corps de fraise (1) lorsque le corps de fraise (1) est monté sur un adaptateur (10) au moyen du dispositif de fixation (9) qui peut être monté sur une extrémité (11) de l'adaptateur (10) insérable dans le premier trou traversant central (6) du corps de fraise (1).

2. Ensemble selon la revendication 1, dans lequel un diamètre (D_{D}) du disque de verrouillage (6) est d'au moins 50 % d'un diamètre maximal (D_{MAX}) du corps de fraise (1).

3. Ensemble selon la revendication 1 ou 2, dans lequel un diamètre (D_{D}) du disque de verrouillage (10) est sensiblement égal à un diamètre (D_{R}) de la surface d'extrémité arrière (3).

4. Ensemble selon l'une quelconque des revendications précédentes, dans lequel la surface d'extrémité avant (2) comprend une pluralité de rainures pour réfrigérant radiales (2a) destinées à acheminer un réfrigérant depuis le premier trou traversant central (6) vers les cavités pour plaquette (5), où les rainures pour réfrigérant radiales (2a) sont au moins en partie couvertes par le disque de verrouillage (7) lorsque le corps de fraise (1) est monté sur l'adaptateur (10).

5. Ensemble selon la revendication 4, dans lequel les rainures pour réfrigérant radiales (2a) dans la surface d'extrémité avant (2) s'étendent entre le premier trou traversant central (6) et les cavités pour plaquette (5).

6. Ensemble selon la revendication 4, dans lequel les rainures pour réfrigérant radiales (2a) dans la surface d'extrémité avant sont reliées à des canaux pour réfrigérant internes (2b) dans le corps de fraise, les canaux pour réfrigérant internes (2b) s'étendant entre les rainures pour réfrigérant radiales (2a) et les cavités pour plaquette (5).

7. Ensemble selon l'une quelconque des revendications précédentes, dans lequel la surface d'extrémité avant (2) forme une surface en dépouille annulaire (2c), laquelle entoure l'axe de rotation central (R) et est configurée pour fournir un intervalle axial (A) par rapport au disque de verrouillage (7), où la surface d'extrémité avant (2) forme une surface de butée (2d), laquelle entoure la surface en dépouille annulaire (2c) et est en contact avec le disque de verrouillage (7) lorsque le corps de fraise (1) est monté sur l'adaptateur (10).

8. Ensemble selon la revendication 7, dans lequel la surface en dépouille annulaire (2c) forme une surface en dépouille conique s'étendant selon un angle aigu θ par rapport à l'axe de rotation central (R) lorsqu'elle est observée dans des sections longitudinales contenant l'axe de rotation central (R) du corps de fraise (1).

9. Ensemble selon la revendication 8, dans lequel l'angle aigu θ se situe dans la plage de 89,5° ≤ θ ≤ 86°.

10. Ensemble selon l'une quelconque des revendications 7 à 9, dans lequel la surface de butée (2d), lorsqu'elle est observée dans des sections longitudinales contenant l'axe de rotation central (R) du corps de fraise, forme une surface de butée convexe destinée à être en contact avec le disque de verrouillage (7) lorsque le corps de fraise (1) est monté sur l'adaptateur (10).

11. Ensemble selon l'une quelconque des revendications 1 à 9, dans lequel le disque de verrouillage (7) comprend une surface de contact en forme de bague au niveau d'une partie extérieure du disque de verrouillage (7), où la surface de contact en forme de bague, lorsqu'elle est observée dans des sections longitudinales contenant l'axe de rotation central (R) du corps de fraise (1), forme une surface de contact convexe destinée à être en contact avec la surface d'extrémité avant (2) lorsque le corps de fraise (1) est monté sur l'adaptateur (10).

12. Ensemble selon l'une quelconque des revendications précédentes, dans lequel le corps de fraise présente une forme de disque formée par la surface d'extrémité arrière (3) comprenant une surface de montage plane (3a) directement reliée à la surface d'enveloppe (4), laquelle s'étend avec un diamètre constamment croissant depuis la surface de montage plane (3a) en direction de la surface d'extrémité avant (2).

13. Ensemble selon la revendication 12, dans lequel la surface d'extrémité arrière (3) comprend en outre des fentes d'entraînement (3b) qui sont en évidement par rapport à la surface de montage plane (3a) et à la surface d'enveloppe (4) reliée à celle-ci.

14. Ensemble selon l'une quelconque des revendications précédentes, dans lequel le dispositif de fixation (9) est une vis présentant une queue filetée (9a) et une tête de vis (9b) incluant une surface d'appui (9c) qui s'incline en direction de la queue filetée (9a), où le second trou traversant central (8) du disque de verrouillage (7) inclut une surface chanfreinée (8a) destinée à la surface d'appui inclinée (9c), de sorte que la tête de vis (9b) est au moins en partie noyée dans le second trou traversant (8) du disque de verrouillage (7) lorsque le corps de fraise (1) est monté sur l'adaptateur (10).

15. Ensemble selon l'une quelconque des revendications précédentes, comprenant un adaptateur (10) incluant une partie d'arbre cylindrique (10a), laquelle est insérable dans le premier trou traversant central (6) du corps de fraise, où le dispositif de fixation (9) est une vis et une extrémité (11) de la partie d'arbre cylindrique (10a) comprend un trou pour vis central (12).

16. Ensemble selon la revendication 15, dans lequel l'adaptateur comprend au moins une voie de passage pour réfrigérant interne (13) s'étendant à l'intérieur de la partie d'arbre cylindrique, où la au moins une voie de passage pour réfrigérant interne (13) présente une sortie (13a) située radialement à l'extérieur par rapport au trou pour vis central (12) dans l'extrémité (11) de la partie d'arbre cylindrique (10a).
